# EUROPÄISCHE PATENTSCHRIFT

(11) **EP 0 611 429 B1**
(45) Veröffentlichungstag und Bekanntmachung des Hinweises auf die Patenterteilung: **02.10.1996**
(21) Anmeldenummer: 92922791.6
(22) Anmeldetag: 23.10.1992
(51) Int. Cl.: F16J 15/16, F16J 15/52, F16J 9/02, F01D 11/00

(54) **WÄRMEBEWEGLICHE ANORDNUNG ZUR ABDICHTUNG EINES ZWISCHENRAUMES, INSBESONDERE BEI EINER DAMPFTURBINE**
THERMALLY MOVABLE ARRANGEMENT FOR SEALING AN INTERMEDIATE SPACE, ESPECIALLY IN A STEAM TURBINE
SYSTEME D'ETANCHEIFICATION THERMOMOBILE POUR ESPACES INTERMEDIAIRES, UTILISE EN PARTICULIER DANS UNE TURBINE A VAPEUR

(30) Priorität: 05.11.1991 DE 4136408
(43) Veröffentlichungstag der Anmeldung: 24.08.1994
(73) Patentinhaber: SIEMENS AKTIENGESELLSCHAFT, 80333 München (DE)
(72) Erfinder: SUESS, Dieter, D-4224 Huenxe-Drevenack (DE)
(86) Internationale Anmeldenummer: DE9200888
(87) Internationale Veröffentlichungsnummer: WO9309366

(56) Entgegenhaltungen:
- EP-A- 0 368 004
- EP-A- 0 391 535
- CH-A- 582 319
- DE-A- 3 840 487
- US-A- 4 132 420

## Beschreibung

Die Erfindung betrifft eine wärmebewegliche Anordnung zur Abdichtung eines Zwischenraumes zwischen einem Außengehäuse und einem Inneneinbau, insbesondere bei einer Dampfturbine. Dampfturbinen haben im allgemeinen Innengehäuse oder andere Inneneinbauten, welche aus verschiedenen mechanischen und thermischen Gründen mit Außengehäusen umgeben sind. Unterschiedliche Wärmedehnungen von Außengehäuse und Inneneinbau führen im Betrieb zu Relativverschiebungen und Abstandsänderungen. Da Zuleitungen oder Ableitungen von Dampf durch der Zwischenraum zwischen Außengehäuse und Inneneinbau geführt werden müssen, wird zur Vermeidung des Eintritts von Dampf in den Zwischenraum eine Anordnung zur Dichtung als Bestandteil der Dampfleitung benötigt, welche trotz der Relativbewegungen und Abstandsänderungen bei allen Betriebszuständen gleichermaßen dicht ist und allenfalls geringe Mengen an Dampf in den Zwischenraum eintreten läßt.

Verschiedene Lösungen dieses Problems sind bekannt, insbesondere die Verwendung von Kolbenringen, Gelenkhülsen oder Zwischenringen. Die Erfindung bezweckt insbesondere eine Verbesserung bekannter Zwischenring-Anordnungen. Solche Anordnungen mit Zwischenringen sind beispielsweise entnehmoar der DE 40 06 327 C2, der DE-OS 1 576 986, der DE-PS 903 933 und der DE-PS 974 992.

Typisch für die Anordnung von rohrähnlichen Zwischenringen ist, daß diese an ihrem oberen Ende höhenbeweglich dichtend im Außengehäuse geführt und an ihrem unteren Ende seitenbeweglich am Innengehäuse bzw. anderen Inneneinbau gehaltert sind. Die höhenbewegliche Halterung am oberen Ende ist durch einen nach Art einer Paßfeder in eine Ringnut des Außengehäuses eingreifenden oberen Ringrand bewerkstelligt, während die seitenbewegliche -Halterung am Innengehäuse durch einen Innenkragen, welcher mittels eines Gewinderinges in dem Zwischenring befestigt ist, erfolgt. Um die Seitenbeweglichkeit sicherzustellen, darf der Gewindering nicht mit zu großer Kraft den Kragen des Zwischenringes gegen den Inneneinbau pressen. Die im Inneren des Zwischenringes angeordneten Teile führen zu einem nachteiligen Druckverlust und können außerdem Turbulenzen verursachen, die unter ungünstigen Bedingungen zu einem Flattern des Zwischenringes führen.

Aufgabe der Erfindung ist die Schaffung einer Anordnung mit einem Zwischenring zur Abdichtung einer Dampfleitung oder dergleichen gegenüber einem Zwischenraum, welche Relativbewegungen und Veränderungen der Größe des Zwischenraumes ausgleichen kann, wobei Inneneinbauten in dem Zwischenring vermieden werden sollen. Darüber hinaus soll bei allen Betriebszuständen ein Flattern des Zwischenringes sicher ausgeschlossen sein.

Zur Lösung dieser Aufgabe dient erfindungsgemäß eine Anordnung zur Abdichtung eines Zwischenraumes zwischen einem Außengehäuse und einem Inneneinbau, insbesondere einem Innengehäuse einer Dampfturbine, mit einem Zwischenring, der ein im Querschnittsprofil etwa L-förmiges Rohrstück ist, als Dichtungselement, der an einem ersten Ende höhenbeweglich und an einem zweiten Ende, wo er einen mindestens eine dichtende Stützfläche aufweisenden Ringfuß aufweist, seitenbeweglich gehaltert ist, wobei der Ringfuß von dem Zwischenring nach außen zeigt und der Zwischenring in seinem Inneren eine Ringflanke aufweist, die von dem ersten Ende zu dem zweiten Ende konisch zuläuft.

Bei der erfindungsgemäßen Anordnung ist der Zwischenring so gestaltet und angeordnet, daß eine positive Differenz zwischen einem Druck im Inneren des Zwischenringes und einem Druck im Zwischenraum immer zu einer den Zwischenring an eine Stützfläche anpressenden Kraft führt. Die Erfindung geht von der Erkenntnis aus, daß ein Druck im Inneren des Zwischenringes selbst zur Verhinderung eines. Flatterns verwendet werden kann, wobei sich die Anordnung unabhängig von einer seitenbeweglichen Halterung durch die Differenz zwischen dem Druck im Inneren des Zwischenringes und dem Druck im Zwischenraum selbst stabilisiert. Erfindungsgemäß wird auch das Erfordernis eines Gewinderinges zur Befestigung des Zwischenringes vermieden.

Besonders geeignet ist hierfür eine Ausführung, bei der der Zwischenring an seinem ersten Ende einen nach Art einer Paßfeder in eine Ringnut des Außengehäuses eingreifenden Ringrand hat und der Ringfuß in einer topfförmigen Aussparung des Inneneinbaus liegt.

Der auf die Ringflanke einwirkende Druck im Inneren des Zwischenringes preßt die dichtende Stützfläche gegen den Boden der topfförmigen Aussparung des Innengehäuses, so daß geringe Turbulenzkräfte im oberen Bereich des Zwischenringes nicht mehr zum Flattern führen können.

Um sicherzustellen, daß sich nicht unter dem Ringfuß durch evtl. dorthin gelangenden Dampf oder anderes Fluid ein Gegendruck ausbildet, der den oben beschriebenen Effekt zunichte machen könnte, ist es günstig, wenn unter dem Ringfuß außen neben der Stützfläche ein Bodenspalt vorhanden ist, der über mindestens eine Entlastungsöffnung mit cem Zwischenraum in Verbindung steht. Dadurch herrscht unter dem Ringfuß neben der Stützfläche immer ein geringerer Druck als im Inneren des Zwischenringes, so daß eine durch die Druckdifferenz zwischen Innerem des Zwischenrings und Zwischenraum präzise definierte Kraft auf die Stützfläche ausgeübt wird. Eventuell unter der dichtenden Stützfläche noch hindurchgelangender Dampf oder anderes Fluid wird in den Zwischenspalt abgeleitet und kann keinen Gegendruck aufbauen.

Im allgemeinen ist es günstig, eine oder mehrere Entlastungsöffnungen als Bohrungen oder Aussparungen im Ringfuß selbst auszugestalten. Prinzipiell können Entlastungsöffnungen aber auch in Form von Kanälen im Innengehäuse oder in einer Halteplatte vorgesehen werden.

Für den Zusammenbau und die Stabilisierung der ganzen Anordnung ist es hilfreich, wenn der Ringfuß außen mit einer Halteplatte am Innengehäuse gehaltert ist, wobei der Ringfuß vorzugsweise von der Halteplatte mit definierter Vorspannung gegen das Innengehäuse gedrückt wird. Auf diese Weise wird auch schon bei relativ niedrigen Druckdifferenzen die Dichtfunktion sichergestellt. Anders als ein im Inneren des Zwischenrings angeordneter Gewindering ist die Halteplatte ein einfaches Bauteil, welches beispielsweise mittels Schrauben am Innengehäuse befestigt werden kann und von oben auf den Ringfuß drückt. Auch mehrere nebeneinander angeordnete Zwischenringe können mit einer einzigen Halteplatte befestigt werden, was weitere erhebliche Vorteile, insbesondere bei der Montage, hat.

Je nach Größe des Zwischenringes kann es erforderlich sein, daß der Ringfuß unten an seiner Außenseite eine Hilfsstützfläche aufweist, welche allzu große Biegekräfte im Zwischenring bei der Befestigung vermeidet.

Der Zwischenring ist vorteilhafterweise ein Bestandteil einer durch den Zwischenraum in den Inneneinbau führenden Dampfleitung, insbesondere einer Dampfleitung, die hochgespannten Dampf zu der im Inneneinbau befindlichen eigentlichen Dampfturbine leitet.

Ausführungsbeispiele der Erfindung sind in der Zeichnung dargestellt, und zwar zeigen
Fig. 1 einen Längsschnitt durch eine erfindungsgemäße Anordnung und
Fig. 2 einen Ausschnitt aus Fig. 1 mit zusätzlicher Hilfsstützfläche am Ringfuß.

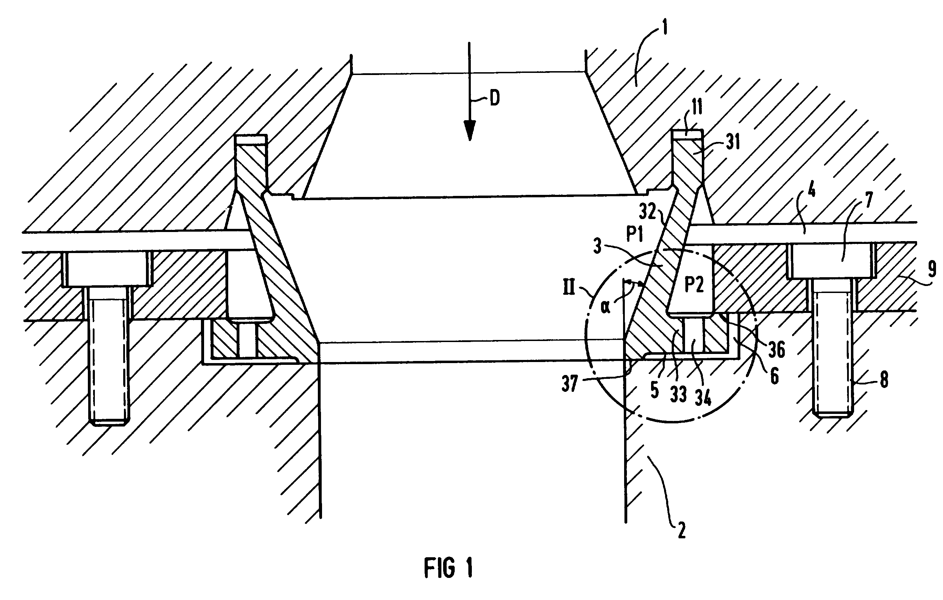

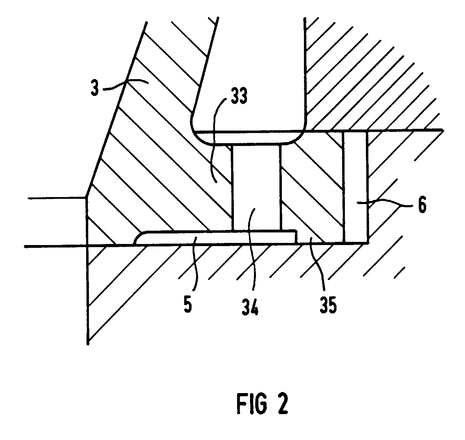

In Fig. 1 ist die Durchführung der Dampfzuleitung einer Turbine zwischen Außengehäuse 1 und Innengehäuse 2 gezeigt. Die Strömungsrichtung des Dampfes D ist durch einen Pfeil angedeutet. Das Außengehäuse weist im Bereich der Durchführung eine konzentrisch zur Dampfleitung angeordnete Ringnut 11 auf, in welche ein Ringrand am ersten Ende 31 eines Zwischenringes 3 nach Art von Nut und Feder höhenbeweglich dichtend eingreift. Die Ringnut 11 ist tief genug, um alle Änderungen der Breite des Zwischenraumes 4 zwischen den beiden Gehäusen ausgleichen zu können. Der Zwischenring 3 weist ein etwa L-förmiges Querschnittsprofil auf, verjüngt sich jedoch nach unten, so daß eine konische Ringflanke 32 vorliegt, welche einen spitzen Winkel alpha von z. B. 10° bis 30° zur Dampfströmungsrichtung bildet. Ein nach außen zeigender kragenartiger Ringfuß am zweiten Ende 33 liegt mit einer Stützfläche 37 auf dem Grund einer topfförmigen Aussparung 6 im Innengehäuse 2 auf. Die topfförmige Aussparung 6 ist so breit, daß sie Seitenbewegungen des Zwischenringes 3 als Ausgleich von Relativbewegungen des Außengehäuses 1 gegenüber dem Innengehäuse 2 zuläßt. Unter dem Ringfuß 33 befindet sich neben der Stützfläche 37 ein Bodenspalt 5, welcher durch mindestens eine Entlastungsöffnung 34 mit dem Zwischenraum 4 in Verbindung steht. Auf diese Weise herrscht im Bodenspalt 5 der gleiche Druck P2 wie im Zwischenraum 4. Der Druck P1 in der Dampfzuleitung und im Inneren des Zwischenringes 3 drückt daher wegen der konischen Ringflanke 32 immer dann mit einer definierten Kraft die Stützfläche 37 des Zwischenringes 3 gegen das Innengehäuse 2, wenn der Druck P1 größer als der Druck P2 im Zwischenraum 4 ist, was bei praktisch allen Betriebszuständen zutrifft. Ein Flattern des Zwischenringes 3 durch Turbulenzen kann wegen dieser definierten Kraft und durch eine weitgehend hindernisfreie, Turbulenzen unterdrückende Gestaltung des Inneren des Zwischenringes 3 sicher vermieden werden. Zur Halterung des Zwischenringes 3 dient eine Halteplatte 9, welche mit in Gewinden 8 eingeschraubten Halteschrauben 7 fixiert wird. Die Halteplatte 9 drückt mit einer Vorspannung auf die Ringfußoberkante 36 und stellt damit eine Mindestanpreßkraft auch bei niedrigen Dampfdrücken P1 sicher. Zur Vermeidung von Biegemomenten im Zwischenring 3 kann eine Hilfsstützfläche 35 am Ringfuß 33 erforderlich sein, wie in Fig. 2 dargestellt. Mit einer Halteplatte 9 können ggf. mehrere Zwischenringe 3 nebeneinander befestigt werden.

Die Erfindung ermöglicht eine haltbare, Relativbewegungen ausgleichende Dichtung mittels eines Zwischenringes, wobei durch Vermeidung von Inneneinbauten in dem Zwischenring der Druckverlust verringert und die Montage vereinfacht wird.

## Patentansprüche

1. Anordnung zur Abdichtung eines Zwischenraumes (4) zwischen einem Außengehäuse (1) und einem Inneneinbau (2), insbesondere einem Innengehäuse (2) einer Dampfturbine, mit einem Zwischenring (3), der ein im Querschnittsprofil etwa L-förmiges Rohrstück ist, als Dichtungselement, der an einem ersten Ende (31) höhenbeweglich und an einem zweiten Ende (33), wo er einen mindestens eine dichtende Stützfläche (37) aufweisenden Ringfuß (33) aufweist, seitenbeweglich gehaltert ist,
**dadurch gekennzeichnet**, daß
der Ringfuß (33) von dem Zwischenring (3) nach außen zeigt und der Zwischenring (3) in seinem Inneren eine Ringflanke (32) aufweist, die von dem ersten Ende (31) zu dem zweiten Ende (33) konisch zuläuft.

2. Anordnung nach Anspruch 1, wobei
a) der Zwischenring (3) an seinem ersten Ende (31) einen nach Art einer Paßfeder in eine Ringnut (11) des Außengehäuses (1) eingreifenden Ringrand hat;
b) der Ringfuß (33) in einer topfförmigen Aussparung (6) des Inneneinbaus (2) liegt.

3. Anordnung nach Anspruch 2, bei der unter dem Ringfuß (33) außen neben der Stützfläche (37) ein Bodenspalt (5) vorhanden ist, der über mindestens eine Entlastungsöffnung (34) mit dem Zwischenraum (4) in Verbindung steht.

4. Anordnung nach Anspruch 3, **dadurch gekennzeichnet**, daß die Entlastungsöffnung (34) eine Bohrung oder Aussparung im Ringfuß (33) ist.

5. Anordnung nach einem der Ansprüche 1 bis 4, **dadurch gekennzeichnet**, daß der Ringfuß (33) außen mit einer Halteplatte (9) an dem Inneneinbau gehaltert ist.

6. Anordnung nach Anspruch 5, **dadurch gekennzeichnet**, daß der Ringfuß (33) von der Halteplatte (9) mit Vorspannung gegen den Inneneinbau gedrückt wird.

7. Anordnung nach Anspruch 5 oder 6, **dadurch gekennzeichnet**, daß der Ringfuß (33) eine Hilfsstützfläche (35) an seiner Außenseite aufweist.

8. Anordnung nach Anspruch 5, 6 oder 7, **dadurch gekennzeichnet**, daß die Halteplatte (9) mittels Schrauben (7) am Inneneinbau befestigt ist.

9. Anordnung nach einem der vorhergehenden Ansprüche, **dadurch gekennzeichnet**, daß der Zwischenring (3) ein Bestandteil einem durch den Zwischenraum (4) in den Inneneinbau führenden Dampfleitung ist.

## Claims

1. Arrangement for sealing an interspace (4) between an external housing (1) and an internal fitting, in particular an internal housing (2) of a steam turbine, having as sealing element an intermediate ring (3) which is a tube length of approximately L-shaped cross-section and which is held on a first end (31) in a vertically movable fashion and on a second end (33), where it has a ring foot (33) having at least one sealing support surface (37), in a laterally movable fashion, characterised in that the ring foot (33) points outwards from the intermediate ring (3) and the intermediate ring (3) has in its interior a ring flank (32) which tapers conically from the first end (31) to the second end (33).

2. Arrangement according to Claim 1, in which
a) the intermediate ring (3) has on its first end (31) a ring rim engaging in the manner of a fitting key in a ring groove (11) of the external housing (1);
b) the ring foot (33) is situated in a pot-shaped recess (6) of the internal fitting (2).

3. Arrangement according to Claim 2, in which a bottom gap (5) which is connected to the interspace (4) via at least one relief opening (34) is present outside, near the support surface (37).

4. Arrangement according to Claim 3, characterised in that the relief opening (34) is a bore or recess in the ring foot (33).

5. Arrangement according to one of Claims 1 to 4, characterised in that the ring foot (33) is held outside on the internal fitting by means of a retaining plate (9).

6. Arrangement according to Claim 5, characterised in that the ring foot (33) is pressed against the internal fitting by the retaining plate (9) by means of prestressing.

7. Arrangement according to Claim 5 or 6, characterised in that the ring foot (33) has an auxiliary support surface (35) on its outside.

8. Arrangement according to Claim 5, 6 or 7, characterised in that the retaining plate (9) is fastened on the internal fitting by means of bolts (7).

9. Arrangement according to one of the preceding claims, characterised in that the intermediate ring (3) is a component of a steam line leading through the interspace (4) into the internal fitting.

## Revendications

1. Dispositif pour rendre étanche un intervalle (4) entre un corps extérieur (1) et une pièce intérieure (2) insérée, notamment une pièce intérieure (2) d'une turbine à vapeur, comportant un anneau intermédiaire (3), qui est une pièce tubulaire à profil de section transversale à peu près en forme de L, en tant qu'élément d'étanchéité, qui est fixé à une première extrémité (31) de façon à pouvoir se mouvoir en hauteur et à une seconde extrémité (33), où il comporte un pied (33) d'anneau ayant au moins une surface (37) d'appui rendant étanche, de manière à pouvoir se mouvoir latéralement,
caractérisé en ce que
le pied (33) d'anneau pointe de l'anneau intermédiaire (3) vers l'extérieur et l'anneau intermédiaire (3) comporte à l'intérieur un flanc (32) d'anneau, qui s'étend de manière conique de la première extrémité (31) à la seconde extrémité (33).

2. Dispositif suivant la revendication 1, dans lequel
a) l'anneau intermédiaire (3) a à sa première extrémité (31) un bord d'anneau s'engageant, à la manière d'une clavette d'ajustage, dans une rainure (11) annulaire du corps extérieur (1);
b) le pied (33) d'anneau se trouve dans un évidement (6) en forme de pot de la pièce intérieure (2) insérée.

3. Dispositif suivant la revendication 2, dans lequel il est prévu sous le pied (33) d'anneau, à l'extérieur et à côté de la surface (37) d'appui, une fente (5) de fond, qui communique, par l'intermédiaire d'au moins une ouverture (34) de décharge, avec l'intervalle (4).

4. Dispositif suivant la revendication 3, caractérisé en ce que l'orifice (34) de décharge est un trou ou un évidement dans le pied (33) d'anneau.

5. Dispositif suivant l'une des revendications 1 à 4, caractérisé en ce que le pied (33) d'anneau est fixé à l'extérieur par un plateau (9) de fixation à la pièce intérieure insérée.

6. Dispositif suivant la revendication 5, caractérisé en ce que le pied (33) d'anneau est pressé par le plateau (9) de maintien avec précontrainte contre la pièce intérieure insérée.

7. Dispositif suivant la revendication 5 ou 6, caractérisé en ce que le pied (33) d'anneau a une surface (35) d'appui auxiliaire sur son côté extérieur.

8. Dispositif suivant la revendication 5, 6 ou 7, caractérisé en ce que la plaque (9) de fixation est fixée à la pièce intérieure insérée au moyen de vis (7).

9. Dispositif suivant l'une des revendications précédentes,
caractérisé en ce que l'anneau (3) intermédiaire fait partie d'une conduite de vapeur menant par l'intervalle (4) à la pièce intérieure insérée.
